# EUROPÄISCHE PATENTSCHRIFT

(11) **EP 4 605 670 B1**
(45) Veröffentlichungstag und Bekanntmachung des Hinweises auf die Patenterteilung: **05.08.2026**
(21) Anmeldenummer: 24700776.8
(22) Anmeldetag: 16.01.2024
(51) Int. Cl.: F16H 57/04

(54) **ANTRIEBSAGGREGAT FÜR EIN KRAFTFAHRZEUG SOWIE KRAFTFAHRZEUG**
DRIVE UNIT FOR A MOTOR VEHICLE, AND MOTOR VEHICLE
UNITÉ D'ENTRAÎNEMENT POUR UN VÉHICULE AUTOMOBILE, ET VÉHICULE AUTOMOBILE

(30) Priorität: 16.01.2023 DE 102023000110
(43) Veröffentlichungstag der Anmeldung: 27.08.2025
(73) Patentinhaber: Mercedes-Benz Group AG, 70372 Stuttgart (DE)
(72) Erfinder: BIETZ, Benno, 71336 Waiblingen (DE); SCHWARZENBERGER, Eugen, 70329 Stuttgart (DE); BURKART, Ralph, 75239 Eisingen (DE); BÄR, Andreas, 68623 Lampertheim (DE)
(74) Vertreter: Novagraaf Group
(86) Internationale Anmeldenummer: PCT/EP2024/050844
(87) Internationale Veröffentlichungsnummer: WO 2024/153602

(56) Entgegenhaltungen:
- WO-A1-2019/088220
- DE-A1- 102014 218 439
- DE-A1- 102019 115 515
- JP-A- 2015 068 488

## Beschreibung

Die Erfindung betrifft ein Antriebsaggregat für ein Kraftfahrzeug, insbesondere für einen Kraftwagen, gemäß dem Oberbegriff von Patentanspruch 1. Des Weiteren betrifft die Erfindung ein Kraftfahrzeug, insbesondere einen Kraftwagen, mit einem solchen Antriebsaggregat.

Der JP 2015 068488 A ist eine Antriebskraftübertragungsvorrichtung als bekannt zu entnehmen, welche einen Differentialgetriebemechanismus mit einer Trennplatte umfasst, wobei die Trennplatte einen im Wesentlichen geneigten, zylindrischen Abdeckungsabschnitt aufweist, der den Umfang des Differentialgehäuses abdeckt.

In der WO 2019/088220 A1 ist ein Automatikgetriebe mit einem Endzahnrad, einem Getriebegehäuse, das das Endzahnrad aufnimmt, und einer Prallplatte offenbart. Ein erster Abdeckabschnitt der Prallplatte befindet sich zwischen dem Endzahnrad und einem Wandabschnitt des Getriebegehäuses.

Der DE 10 2010 004 222 A1 ist ein Getriebe für ein Kraftfahrzeug als bekannt zu entnehmen, mit einem zur Übertragung von Drehmoment rotierbaren Getriebeelement, das in einem ersten Abschnitt des Getriebes angeordnet ist. Vorgesehen ist auch ein Speicher für eine Flüssigkeit zur Schmierung und Kühlung des Getriebeelements, wobei der Speicher in einem von dem ersten Abschnitt getrennten, zweiten Abschnitt des Getriebes angeordnet ist.

Aufgabe der vorliegenden Erfindung ist es, ein Antriebsaggregat für ein Kraftfahrzeug sowie ein Kraftfahrzeug mit einem solchen Antriebsaggregat zu realisieren, sodass eine besonders vorteilhafte Ölführung realisiert werden kann.

Diese Aufgabe wird durch ein Antriebsaggregat für ein Kraftfahrzeug mit den Merkmalen des Patentanspruchs 1 sowie durch ein Kraftfahrzeug mit den Merkmalen des Patentanspruchs 6 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Antriebsaggregat für ein einfach auch als Fahrzeug bezeichnetes und vorzugsweise als Kraftwagen, insbesondere als Personenkraftwagen, ausgebildetes Kraftfahrzeug. Dies bedeutet, dass das Kraftfahrzeug in seinem vollständig hergestellten Zustand das Antriebsaggregat aufweist und mittels des Antriebsaggregats oder über das Antriebsaggregat antreibbar ist. Das Antriebsaggregat weist ein Gehäuse auf, welches beispielsweise mehrteilig ausgebildet sein und somit mehrere Gehäuseteile aufweisen kann. Insbesondere sind die Gehäuseteile separat voneinander ausgebildet und miteinander verbunden. Das Antriebsaggregat weist eine einfach auch als Getriebe bezeichnete Getriebeeinrichtung auf, welche Getriebeelemente aufweist. Die Getriebeelemente sind in einem Getriebegehäuseteil des Gehäuses angeordnet, wobei das Getriebegehäuseteil auch als Getriebegehäuse bezeichnet wird. Beispielsweise ist das Getriebegehäuseteil ein erstes der Gehäuseteile des Gehäuses. Insbesondere sind die Getriebeelemente in einem Getrieberaum des Gehäuses, insbesondere des Getriebegehäuseteils, angeordnet, wobei beispielsweise der Getrieberaum, insbesondere direkt, durch das Gehäuse, insbesondere durch das Getriebegehäuseteil, begrenzt ist. Ganz vorzugsweise ist der Getrieberaum durch eine innenumfangsseitige Mantelfläche des Gehäuses, insbesondere des Getriebegehäuseteils, begrenzt, insbesondere direkt begrenzt. Ein erstes der Getriebeelemente kann beispielsweise ein erstes Zahnrad sein, welches beispielsweise eine erste Verzahnung aufweist. Ein zweites der Getriebeelemente kann beispielsweise ein zweites Zahnrad sein, welches eine zweite Verzahnung aufweist. Insbesondere ist es denkbar, dass die Zahnräder über die Verzahnungen miteinander kämmen. Das Antriebsaggregat weist auch zumindest einen Radsatz auf, welcher vorzugsweise zusätzlich zu den Getriebeelementen vorgesehen ist. Der Radsatz ist in einem Radsatzraum des Gehäuses angeordnet. Somit ist der Radsatzraum durch das Gehäuse, insbesondere durch die innenumfangsseitige Mantelfläche des Gehäuses, insbesondere direkt, begrenzt. Beispielsweise kann das Gehäuse ein Radsatzgehäuseteil aufweisen, wobei der Radsatzraum durch das Radsatzgehäuseteil, insbesondere durch eine innenumfangsseitige Mantelfläche des Radsatzgehäuseteils, begrenzt, insbesondere direkt begrenzt, sein kann. Beispielsweise ist das Radsatzgehäuseteil ein zweites der Gehäuseteile. Der Radsatz umfasst beispielsweise wenigstens oder genau zwei insbesondere in Eingriff miteinander stehende Zahnräder. Das Antriebsaggregat umfasst außerdem eine insbesondere zusätzlich zu der Getriebeeinrichtung und vorzugsweise zusätzlich zu dem Radsatz vorgesehene Kupplungseinrichtung, welche beispielsweise als eine Mehrfachkupplung, insbesondere Doppelkupplung mit wenigstens oder genau zwei Kupplungen, ausgebildet ist. Ferner ist es denkbar, dass die Kupplungseinrichtung mehr als zwei Kupplungen aufweist, wobei beispielsweise die Kupplungseinrichtung als eine Dreifachkupplung mit wenigstens oder genau drei Kupplungen ausgebildet ist. Die Kupplungseinrichtung ist in einem Kupplungsraum des Gehäuses angeordnet, wobei beispielsweise der Kupplungsraum, insbesondere direkt, durch die innenumfangsseitige Mantelfläche des Gehäuses gebildet ist. Beispielsweise ist der Kupplungsraum durch ein Kupplungsgehäuse, insbesondere durch eine innenumfangsseitige Mantelfläche des Kupplungsgehäuses, begrenzt, insbesondere direkt begrenzt, wobei beispielsweise das Kupplungsgehäuse ein zweites oder drittes der Gehäuseteile ist. Das Antriebsaggregat umfasst außerdem eine Differentialeinheit, welche auch als Differentialgetriebe bezeichnet wird oder als ein Differentialgetriebe ausgebildet ist. Das Differentialgetriebe wird auch einfach als Differential bezeichnet. Insbesondere können beispielsweise über das Differentialgetriebe wenigstens oder genau zwei Fahrzeugräder des Kraftfahrzeugs, insbesondere mittels einer Antriebsmaschine, angetrieben werden. Die Differentialeinheit umfasst dabei ein Tellerrad. Das Tellerrad ist ein Zahnrad, welches insbesondere zusätzlich zu den zuvor genannten Zahnrädern vorgesehen ist.

Das Antriebsaggregat weist außerdem einen einfach auch als Sumpf bezeichneten Ölsumpf auf, welcher durch ein als Öl ausgebildetes Schmier- und Kühlmittel gebildet ist. Das Öl ist eine Flüssigkeit, wobei mittels des Öls beispielsweise die Getriebeelemente und/oder der Radsatz und/oder die Kupplungseinrichtung und/oder das Tellerrad geschmiert und/oder gekühlt werden können. Der Ölsumpf ist in einem Bodenbereich des Radsatzraums angeordnet und für eine Ansammlung des Öls zumindest zur Schmierung und Kühlung der Getriebeelemente vorgesehen. Dies bedeutet, dass sich das Öl, insbesondere nachdem es die Getriebeelemente gekühlt und geschmiert hat, in dem Bodenbereich unter Ausbildung des Ölsumpfs ansammeln kann.

Um nun eine besonders vorteilhafte, auch als Ölführung bezeichnete Führung des Öls realisieren zu können, ist erfindungsgemäß eine Differentialkapselungseinrichtung vorgesehen. Vorzugsweise ist die Differentialkapselungseinrichtung separat von dem Gehäuse und somit insbesondere separat von den Gehäuseteilen ausgebildet und beispielsweise zumindest mittelbar, insbesondere direkt, an dem Gehäuse befestigt. Die Differentialkapselungseinrichtung ist auf einer auch als axiale Seite bezeichneten, axialen Stirnseite der Differentialeinheit angeordnet. Dies bedeutet, dass die Differentialeinheit zwei in axialer Richtung der Differentialeinheit und somit des Antriebsaggregats insgesamt voneinander wegweisende und einander gegenüberliegende, axiale Stirnseiten aufweist, wobei die Differentialkapselungseinrichtung auf einer der axialen Stirnseiten der Differentialeinheit angeordnet ist. Die axiale Richtung der Differentialeinheit fällt mit einer Drehachse zusammen, um welche das Tellerrad relativ zu dem Gehäuse drehbar ist. Während eines Betriebs des Antriebsaggregats dreht sich somit beispielsweise das Tellerrad um die Drehachse relativ zu dem Gehäuse, wobei beispielsweise während des Betriebs des Antriebsaggregats das Kraftfahrzeug mittels des Antriebsaggregats beziehungsweise über das Antriebsaggregat angetrieben wird. Die Differentialkapselungseinrichtung ist als ein zumindest im Wesentlichen radialer Ringkörper ausgeführt, welcher in einem radialen Bereich des Tellerrads angeordnet ist und sich in eine insbesondere um die Drehachse verlaufende Umfangsrichtung der Differentialeinheit, insbesondere des Tellerrads, über höchstens 75 Prozent, mithin über höchstens 3/4 eines in Umfangsrichtung verlaufenden Umfangs der Differentialeinheit, insbesondere des Tellerrads, erstreckt. Dies bedeutet, dass die Differentialkapselungseinrichtung in um die Drehachse verlaufender Umfangsrichtung des Tellerrads betrachtet ringförmig und dabei als ein Ring oder als eine Art Ring ausgebildet ist, wobei sich der Ring jedoch nicht in um die Drehachse verlaufender Umfangsrichtung der Differentialeinheit und somit des Tellerrads vollständig umlaufend beziehungsweise durchgängig erstreckt, sondern der Ring erstreckt sich in um die Drehachse verlaufender Umfangsrichtung der Differentialeinheit über höchstens 75 Prozent des Umfangs der Differentialeinheit, insbesondere des Tellerrads, sodass sich beispielsweise der Ring beziehungsweise der Ringkörper, mithin die Differentialkapselungseinrichtung, in um die Drehachse verlaufender Umfangsrichtung der Differentialeinheit beziehungsweise des Tellerrads über höchstens 270 Grad erstreckt. Wieder mit anderen Worten ausgedrückt erstreckt sich der Ringkörper radial, das heißt in um die Drehachse verlaufender Umfangsrichtung der Differentialeinheit und des Tellerrads nicht über 360 Grad, sodass der Ringkörper radial, das heißt in Umfangsrichtung der Differentialeinheit, nicht geschlossen ist, sondern der Ringkörper ist radial, das heißt in um die Drehachse verlaufender Umfangsrichtung der Differentialeinheit betrachtet offen, derart, dass sich der Ringkörper über höchstens 75 Prozent des Umfangs der Differentialeinheit beziehungsweise über höchstens 270 Grad erstreckt, und zwar in um die Drehachse verlaufender Umfangsrichtung der Differentialeinheit und somit des Tellerrads betrachtet. Der zuvor genannte, radiale Bereich des Tellerrads ist somit ein sich in Umfangsrichtung der Differentialeinheit erstreckender Bereich, in welchem der Ringkörper angeordnet ist beziehungsweise verläuft, wobei sich der radiale Bereich in um die Drehachse verlaufender Umfangsrichtung der Differentialeinheit nicht über 360 Grad, das heißt nicht vollständig, umlaufend erstreckt, sondern der radiale Bereich, in welchem der Ringkörper angeordnet ist, erstreckt sich in Umfangsrichtung der Differentialeinheit betrachtet höchstens über 75 Prozent des Umfangs der Differentialeinheit, das heißt insbesondere über höchstens 270 Grad. Beispielsweise in einer senkrecht zur axialen Richtung der Differentialeinheit verlaufenden Ebene und beispielsweise aus insbesondere hin zu der Differentialkapselungseinrichtung verlaufender Richtung der Kupplungseinrichtung betrachtet erstreckt sich beispielsweise die Differentialkapselungseinrichtung, mithin der Ringkörper, in Umfangsrichtung der Differentialeinheit von einer in etwa Ein-Uhr-Position gegen den Uhrzeigersinn bis zu einer in etwa Vier-Uhr-Position.

Die Differentialkapselungseinrichtung weist auf einer dem Radsatzraum zugewandten axialen Seite, insbesondere Stirnseite, der Differentialkapselungseinrichtung einen Durchbruch für eine Ausleitung des Öls aus der Differentialeinheit auf. Beispielsweise weist die Differentialkapselungseinrichtung zwei in axialer Richtung der Differentialeinheit und somit der Differentialkapselungseinrichtung voneinander wegweisende oder einander gegenüberliegende, axiale Seiten, insbesondere Stirnseiten, auf, wobei die Differentialkapseleinrichtung auf einer ihrer axialen Seiten den genannten Durchbruch aufweist. Insbesondere ist der Durchbruch eine beispielsweise als Bohrung ausgebildete und/oder durch mechanisches Bearbeiten ausgebildete Durchgangsöffnung, welche von dem Öl durchströmbar ist, um dadurch das Öl aus der Differentialeinheit auszuleiten oder abzuführen und beispielsweise dem Ölsumpf zuzuführen. Es ist denkbar, dass der Durchbruch ein auch als Ölkanal bezeichneter Kanal ist, welcher von dem Öl aus der Differentialeinheit durchströmbar ist, um dadurch das Öl aus der Differentialeinheit auszuleiten oder abzuführen. Wieder mit anderen Worten ausgedrückt kann das Öl, nachdem es die Differentialeinheit, insbesondere das Tellerrad, gekühlt und/oder geschmiert hat, von der Differentialeinheit den Durchbruch durchströmen und somit über den Durchbruch aus der Differentialeinheit ausgeleitet werden.

Die Differentialkapseleinrichtung weist auf ihrer dem Radsatzraum zugewandten axialen Seite eine gegenüber der Umfangsrichtung schräg angestellte Ölrampe für ein Rückführen des bei ersten Fahrgeschwindigkeiten des Kraftfahrzeugs von dem Tellerrad abspritzenden Öls in den Ölsumpf auf. Mit anderen Worten, wird das Kraftfahrzeug über das Antriebsaggregat derart angetrieben, dass das Kraftfahrzeug mit einer ersten Fahrgeschwindigkeit, insbesondere entlang eines Bodens, gefahren wird, so dreht sich das Tellerrad um die Drehachse relativ zu dem Gehäuse, wobei das Öl, mittels welchem das Tellerrad geschmiert und gekühlt wird, von dem Tellerrad abgespritzt wird. Das von dem Tellerrad bei der ersten Fahrgeschwindigkeit abgespritzte Öl kann beispielsweise mittels der Ölrampe aufgefangen werden und/oder entlang der Ölrampe strömen und wird mittels der Ölrampe in den Ölsumpf geführt, das heißt rückgeführt.

Des Weiteren weist die Differentialkapseleinrichtung auf ihrer dem Radsatzraum insbesondere in axialer Richtung der Differentialeinheit und somit des Antriebsaggregats insgesamt zugewandten axialen Seite einen in einem in Einbaulage des Antriebsaggregats in Fahrzeughochrichtung oberen Bereich angeordneten und sich in Umfangsrichtung der Differentialeinheit erstreckenden und bei dem Durchbruch endenden Ölführungskanal für ein Rückführen des bei gegenüber den ersten Fahrgeschwindigkeiten höheren, zweiten Fahrgeschwindigkeiten des Kraftfahrzeugs von dem Tellerrad abgespritzten Öls in den Ölsumpf auf. Mit anderen Worten, der auf der dem Radsatzraum in axialer Richtung der Differentialeinheit zugewandten, axialen Seite angeordnete Ölführungskanal ist in einem in Einbaulage des Antriebsaggregats in Fahrzeughochrichtung oberen Bereich, insbesondere der Differentialkapseleinrichtung, angeordnet. Das Antriebsaggregat nimmt seine Einbaulage in vollständig hergestelltem Zustand des das Antriebsaggregat aufweisenden Kraftfahrzeugs ein. Dabei erstreckt sich der Ölführungskanal in um die Drehachse verlaufender Umfangsrichtung der Differentialeinheit, wobei der Ölführungskanal bei oder an dem Durchbruch endet. Wird das Kraftfahrzeug über das Antriebsaggregat derart angetrieben, dass das Kraftfahrzeug mit einer gegenüber der ersten Fahrgeschwindigkeit höheren oder größeren, zweiten Fahrgeschwindigkeit, insbesondere entlang des Bodens, gefahren wird, so wird das Öl von dem Tellerrad abgespritzt. Das von dem Tellerrad bei der zweiten Fahrgeschwindigkeit abgespritzte Öl kann in den Ölführungskanal einströmen und/oder wird in den Ölführungskanal eingespritzt und kann in der Folge den Ölführungskanal durchströmen und wird mittels des Ölführungskanals zurück in den Ölsumpf geführt. Die Differentialkapseleinrichtung ermöglicht es somit, in allen Geschwindigkeitsbereichen das von dem Tellerrad abspritzende Öl zu sammeln und zurück in den Sumpf beispielsweise zu einem Ansaugbereich einer Pumpe zu führen, mittels welcher beispielsweise das Öl, insbesondere aus dem Sumpf, angesaugt und gefördert werden kann, insbesondere derart, dass beispielsweise das mittels der Pumpe angesaugte und geförderte Öl mittels der Pumpe (wieder) zu den Getriebeelementen und/oder dem Radsatz und/oder dem Tellerrad und/oder der Differentialeinheit und/oder der Differentialkapseleinrichtung gefördert wird. Beispielsweise handelt es sich bei der Pumpe um eine elektrisch betreibbare Pumpe, wobei die Pumpe auch als Ölpumpe bezeichnet wird. Es ist erkennbar, dass die Differentialkapseleinrichtung zumindest drei Funktionen aufweist. Eine erste der Funktionen umfasst, dass mittels des Durchbruches der Differentialkapseleinrichtung das Öl aus der Differentialeinheit ausgeleitet werden kann. Eine zweite der Funktionen umfasst, dass mittels der Ölrampe das Öl, welches bei ersten Fahrgeschwindigkeiten von dem Tellerrad abgeführt wird, zurück zu dem und in den Sumpf geführt werden kann. Eine dritte der Funktionen umfasst, dass mittels des Ölführungskanals das Öl, welches bei den zweiten Fahrgeschwindigkeiten von dem Tellerrad abgespritzt wird, zurück zu dem und in den Sumpf geführt werden kann. Das Öl kann somit beispielsweise drei auch als Ölströme bezeichnete Ströme bilden. Ein erster der Ströme ist beispielsweise durch das Öl gebildet, welches aus dem Kupplungsraum ausströmt. Ein zweiter der Ströme ist beispielsweise das Öl, welches bei den ersten, geringen oder geringeren Fahrgeschwindigkeiten von dem Tellerrad abgespritzt wird. Ein dritter der Ströme ist beispielsweise das Öl oder durch das Öl gebildet, welches von dem Tellerrad bei den hohen oder höheren, zweiten Geschwindigkeiten abgespritzt wird. Die ersten Geschwindigkeiten liegen beispielsweise in einem Bereich von 0 bis 25 Kilometer pro Stunde, wobei beispielsweise die zweiten Geschwindigkeiten in einem Bereich von 25 bis 250 Kilometer pro Stunde liegen. Die Ölströme können durch die Differentialkapseleinrichtung, welche auch als Differentialkapselungseinrichtung bezeichnet wird, zu einem Gesamtstrom vereinigt und beispielsweise beruhigt werden. Mit anderen Worten kann beispielsweise der Gesamtstrom insbesondere auf seinem Weg zu dem Ölsumpf und insbesondere auf seinem Weg zu wenigstens einem oder mehreren Ansaugmündern eines Ölfilters und/oder einer Ölwanne des Antriebsaggregats beruhigt werden, sodass eine besonders vorteilhafte Führung des Öls darstellbar ist. Insbesondere wird die Differentialkapseleinrichtung zur Abkapselung der Differentialeinheit beziehungsweise des auch als Kupplungsgehäuse bezeichneten Kupplungsgehäuseteils verwendet, insbesondere durch eine Abdeckung in Form der Differentialkapseleinrichtung. Die genannten Ströme stammen beispielsweise aus unterschiedlichen Ölräumen, welche beispielsweise zumindest teilweise voneinander getrennt sind. Ein erster der Ölräume ist beispielsweise der Kupplungsraum. Mittels der Differentialkapseleinrichtung können die Ölströme aus den insbesondere voneinander getrennten Ölräumen zusammengeführt werden, insbesondere zu dem Gesamtstrom. Im Vergleich zu herkömmlichen Lösungen hat das mittels der Pumpe angesaugte Öl einen geringeren Luftanteil, da die Differentialkapseleinrichtung auch zur Beruhigung und insbesondere zur Entgasung des Öls, insbesondere des Gesamtstroms, verwendet wird. Dadurch kann im Vergleich zu herkömmlichen Lösungen eine Schleppleistungsoptimierung des Antriebsaggregats dargestellt werden. Insbesondere ermöglicht die Differentialkapseleinrichtung eine ölberuhigte Abführung des verschäumten Öls insbesondere aus dem Kupplungsraum und somit von der Kupplungseinrichtung zurück in den Ölsumpf. Das Öl kommt bereits entgast und beruhigt zu dem Ölsumpf und/oder zu den genannten Ansaugmündern, sodass das Öl besonders vorteilhaft geleitet und gefördert werden kann.

In vorteilhafter Ausgestaltung der Erfindung ist der Durchbruch in Einbaulage des Antriebsaggregats und insbesondere in einer senkrecht zur axialen Richtung der Differentialeinheit verlaufenden Ebene betrachtet in oder auf einer in etwa Neun-Uhr-Position angeordnet, wodurch eine besonders vorteilhafte Führung des Öls realisiert werden kann.

Erfindungsgemäß ist die insbesondere separat von dem Getriebegehäuseteil ausgebildete Differentialkapselungseinrichtung, insbesondere direkt, an dem Getriebegehäuseteil befestigt. Dabei deckt die Differentialkapselungseinrichtung in Einbaulage des Antriebsaggregats auf einer dem den Kupplungsraum bildenden Kupplungsgehäuseteil des Gehäuses zugewandten Seite einen Ölaustrittsbereich für aus dem Kupplungsgehäuse austretendes Öl ab. Dadurch kann die Differentialkapseleinrichtung zweifach beziehungsweise beidseitig, das heißt auf ihren beiden axialen Seiten, genutzt werden, um das Öl bedarfsgerecht zu führen. Somit umfasst beispielsweise eine vierte der Funktionen der Differentialkapseleinrichtung, dass die Differentialkapseleinrichtung auf der dem Kupplungsgehäuseteil zugewandten Seite der Differentialkapseleinrichtung den Ölaustrittsbereich abdeckt, wobei beispielsweise die dem Kupplungsgehäuseteil insbesondere in axialer Richtung der Differentialeinheit zugewandten Seite der Differentialkapseleinrichtung die andere der axialen Seiten der Differentialkapseleinrichtung sein kann. Dadurch kann eine beidseitige Nutzung der Differentialkapseleinrichtung realisiert werden, um das Öl auf beiden axialen Seiten der Differentialkapseleinrichtung bedarfsgerecht und vorteilhaft führen zu können.

Eine weitere Ausgestaltung der Erfindung zeichnet sich dadurch aus, dass die Differentialkapseleinrichtung einen Verdrängungskörper mit einem Rampenlabyrinth aufweist. Somit umfasst beispielsweise eine fünfte der Funktionen der Differentialkapseleinrichtung den Verdrängungskörper mit dem Rampenlabyrinth. Vorzugsweise ist der Verdrängungskörper mit dem Rampenlabyrinth insbesondere in der genannten, senkrecht zur axialen Richtung verlaufenden Ebene betrachtet in oder auf einer in etwa Fünf-Uhr-Position angeordnet. Hierdurch kann eine besonders vorteilhafte Führung, Beruhigung und insbesondere Entgasung des Öls dargestellt werden. Beispielsweise ist der Verdrängungskörper mit dem Rampenlabyrinth auf der dem Kupplungsgehäuseteil zugewandten Seite der Differentialkapseleinrichtung angeordnet. Schließlich hat es sich als besonders vorteilhaft gezeigt, wenn die Differentialkapseleinrichtung in einem Bereich, in welchem für Allradgetriebevarianten eine auch als PTU (Power-Take-Off-Unit) bezeichneter Nebenabtrieb angeordnet ist, an einer Außenseite eine nach innen gezogene Bogenkontur aufweist, welche beispielsweise auf ihrer dem Bereich beziehungsweise dem Nebenabtrieb zugwandten Seite konkav gewölbt, das heißt von dem Bereich beziehungsweise von dem Nebenabtrieb weg gewölbt ist. Hierdurch kann die Differentialkapseleinheit in zumindest nahezu allen Derivaten oder Varianten des Kraftfahrzeugs und somit beispielsweise in Varianten mit einem Zweiradantrieb und in Varianten mit einem Allrad- beziehungsweise Vierradantrieb des Kraftfahrzeugs verwendet, das heißt montiert, werden, sodass die Varianten besonders kostengünstig darstellbar sind.

Ein zweiter Aspekt der Erfindung betrifft ein einfach auch als Fahrzeug bezeichnetes und vorzugsweise als Kraftwagen, insbesondere als Personenkraftwagen, ausgebildetes Kraftfahrzeug, welches ein Antriebsaggregat gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische und geschnittene Perspektivansicht eines Antriebsaggregats für ein Kraftfahrzeug;
- Fig. 2: eine schematische Perspektivansicht einer Differentialkapseleinrichtung des Antriebsaggregats;
- Fig. 3: eine weitere schematische Perspektivansicht der Differentialkapseleinrichtung;
- Fig. 4: eine weitere schematische Perspektivansicht der Differentialkapseleinrichtung;
- Fig. 5: ausschnittsweise eine schematische des Antriebsaggregats in y-Richtung auf eine zweite axiale Stirnseite der Differentialkapseleinrichtung;
- Fig. 6: ausschnittsweise eine schematische Längsschnittansicht des Antriebsaggregats in x-Richtung;
- Fig. 7: ausschnittsweise eine weitere schematische Längsschnittansicht des Antriebsaggregats in x-Richtung;
- Fig. 8: ausschnittsweise eine schematische Querschnittansicht des Antriebsaggregats in y-Richtung;
- Fig. 9: ausschnittsweise eine weitere schematische Längsschnittansicht des Antriebsaggregats in x-Richtung.

In den Fig. sind gleiche oder funktionsgleiche Elemente mit gleichen Bezugszeichen versehen.

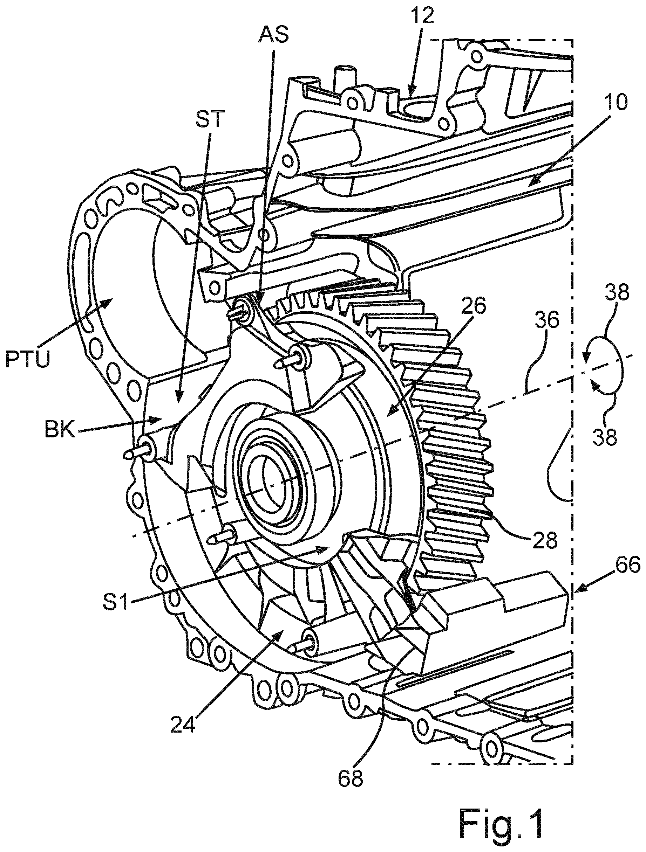

Fig. 1 zeigt ausschnittsweise in einer schematischen und geschnittenen Perspektivansicht ein Antriebsaggregat 10 für ein einfach auch als Fahrzeug bezeichnetes Kraftfahrzeug.

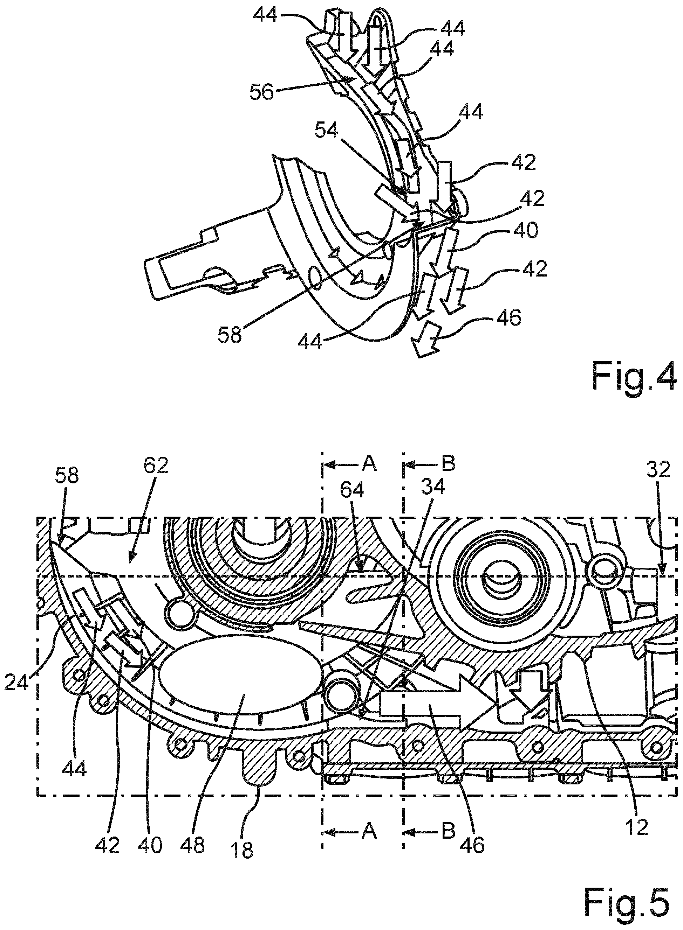

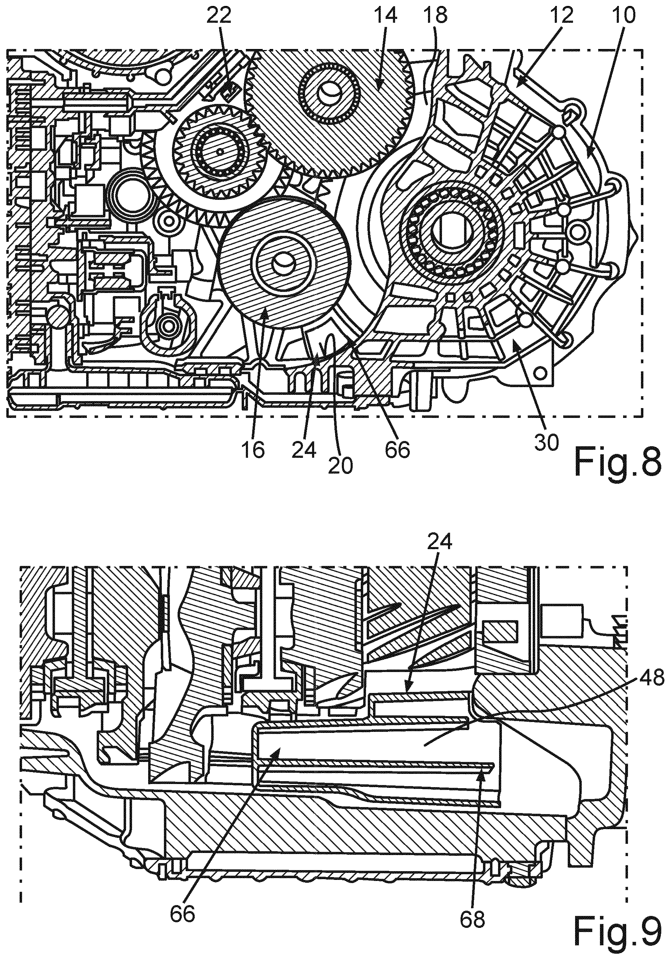

Dies bedeutet, dass das vorzugsweise als Kraftwagen, insbesondere als Personenkraftwagen, ausgebildete Kraftfahrzeug in seinem vollständig hergestellten Zustand das Antriebsaggregat 10 aufweist. Mittels des Antriebsaggregats 10 oder über das Antriebsaggregat 10 ist das Kraftfahrzeug antreibbar. Das Antriebsaggregat 10 weist ein Gehäuse 12 auf, welches einteilig, mithin einstückig, oder aber mehrteilig ausgebildet sein kann. Beispielsweise in Zusammenschau mit Fig. 8 ist erkennbar, dass das Antriebsaggregat 10 eine einfach auch als Getriebe bezeichnete Getriebeeinrichtung 14 aufweist, welche beispielsweise als Zahnräder ausgebildet oder Zahnräder umfassende Getriebeelemente 16 aufweist, die in einem Getriebegehäuseteil 18 des Gehäuses 12 angeordnet sind. Beispielsweise ist durch das Getriebegehäuseteil 18, insbesondere durch eine innenumfangsseitige Mantelfläche 20 des Getriebegehäuseteils 18, ein Getrieberaum 22 begrenzt, insbesondere direkt begrenzt, wobei die Getriebeelemente 16 im Getrieberaum 22 und somit in dem Getriebegehäuseteil 18 angeordnet sein können. Vorgesehen ist auch ein Radsatz, welcher in einem Radsatzraum des Gehäuses 12 angeordnet ist. Das Antriebsaggregat 10 umfasst außerdem wenigstens eine Kupplungseinrichtung, welche beispielsweise als Doppelkupplung oder Dreifachkupplung oder andere Kupplung ausgebildet sein kann. Die Kupplungseinrichtung ist in einem Kupplungsraum des Gehäuses 12 angeordnet, wobei der Kupplungsraum beispielsweise durch ein Kupplungsgehäuseteil, insbesondere durch eine innenumfangsseitige Mantelfläche des Kupplungsgehäuseteils, begrenzt, insbesondere direkt begrenzt, sein kann. Es ist denkbar, dass das Getriebegehäuseteil 18 und das Kupplungsgehäuseteil separat voneinander ausgebildete und miteinander verbundene Teile sind, oder das Getriebegehäuseteil 18 und das Kupplungsgehäuseteil sind einstückig miteinander ausgebildet, mithin aus einem einzigen Stück gebildet. In Fig. 1 sind beispielsweise das Kupplungsgehäuseteil und die Kupplungseinrichtung zumindest überwiegend ausgeblendet, sodass ein Betrachter, welcher Fig. 1 betrachtet, von der Kupplungseinrichtung aus auf das Gehäuse 12 und dabei auf eine Differentialkapseleinrichtung 24 blickt, welche auch als Differentialkapselungseinrichtung bezeichnet wird und im Folgenden noch näher erläutert wird. Das Antriebsaggregat 10 umfasst außerdem eine einfach auch als Differential bezeichnete und insbesondere als Differentialgetriebe ausgebildete Differentialeinheit 26, welche ein Tellerrad 28 aufweist. Das Tellerrad 28 ist um eine Drehachse 36 relativ zu dem Gehäuse 12 drehbar. Das Antriebsaggregat 10 weist außerdem einen beispielsweise in Fig. 5 besonders schematisch dargestellten, einfach auch als Sumpf bezeichneten Ölsumpf 30 auf, dessen auch als Pegel bezeichneter Ölpegel in Fig. 5 veranschaulicht und mit 32 bezeichnet ist. Der Ölsumpf 30 ist in einem Bodenbereich 34 des Gehäuses 12, insbesondere des Getriebegehäuseteils 18, angeordnet und wird zur Ansammlung von Öl verwendet, welches zur Schmierung und Kühlung zumindest der Getriebeelemente 16 verwendet wird.

Um nun eine besonders vorteilhafte, auch als Ölführung bezeichnete Führung des Öls zu realisieren, weist das Antriebsaggregat 10 die Differentialkapseleinrichtung 24 auf. Aus Fig. 1 ist erkennbar, dass die Differentialkapseleinrichtung 24 auf einer axialen Stirnseite S1 der Differentialeinheit 26 angeordnet und als ein radialer Ringkörper ausgeführt ist, welcher an einem radialen, das heißt sich in um die Drehachse 36 verlaufender Umfangsrichtung der Differentialeinheit 26 erstreckenden Bereich des Tellerrads 28 angeordnet ist, derart, dass die Differentialkapseleinrichtung 24 als ein radialer, das heißt sich in Umfangsrichtung der Differentialeinheit 26 und somit des Tellerrads 28 erstreckender Ringkörper ausgeführt ist, welcher sich jedoch in Umfangsrichtung der Differentialeinheit 24 nicht vollständig, das heißt nicht über 360 Grad, erstreckt, sondern der Ringkörper erstreckt sich in Umfangsrichtung der Differentialeinheit 26 sowie des Tellerrads 28 über höchstens 75 Prozent eines Umfangs der Differentialeinheit 26 und somit insbesondere über höchstens 270 Grad. Die Umfangsrichtung der Differentialeinheit 26 und somit des Tellerrads 28 ist in Fig. 1 durch einen Doppelpfeil 38 veranschaulicht und verläuft um die Drehachse 36, um welche sich das Tellerrad 28 der Differentialeinheit 26, deren axiale Richtung mit der Drehachse 36 zusammenfällt, bei einem Betrieb des Antriebsaggregats 10 relativ zu dem Gehäuse 12 dreht oder drehen kann. Die axiale Richtung der Differentialeinheit 26 verläuft dabei in axialer Richtung des Tellerrads 28 beziehungsweise fällt mit der axialen Richtung des Tellerrads 28 zusammen.

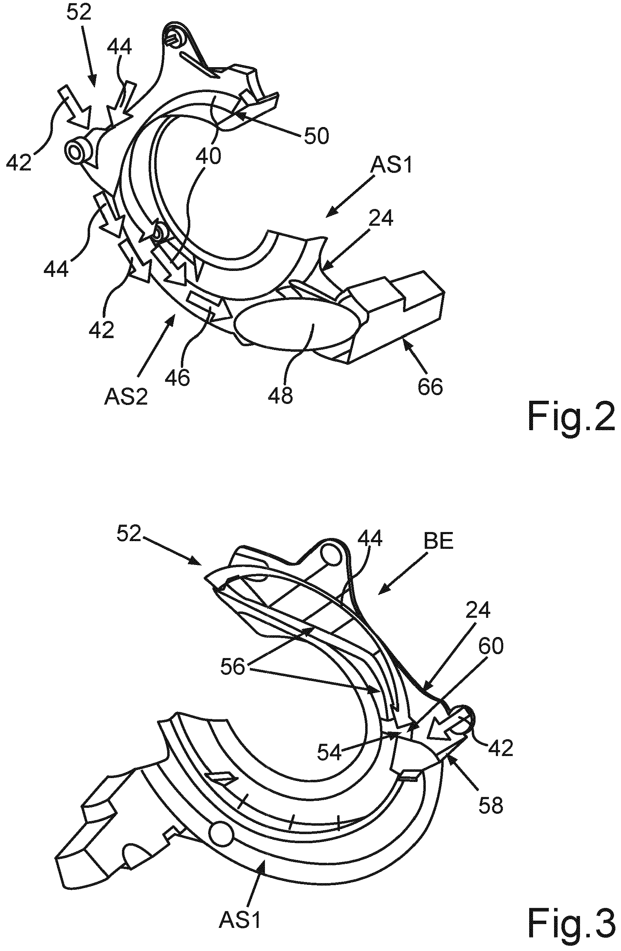

Die Differentialkapseleinrichtung 24 ist besonders gut aus Fig. 2 bis 4 erkennbar. In Fig. 2 ist durch Pfeile eine erste Strömung des Öls veranschaulicht, wobei die erste Strömung des Öls auch als erste Ölströmung 40, erster Strom oder erster Teilstrom oder erste Teilströmung bezeichnet wird. Die auch als erster Ölstrom bezeichnete, erste Ölströmung 40 stammt insbesondere aus dem Kupplungsraum und somit insbesondere von der Kupplungseinrichtung. Mit anderen Worten ist die erste Ölströmung 40 insbesondere durch das Öl gebildet, welches aus dem Kupplungsraum ausströmt und somit von der Kupplungseinrichtung wegströmt, insbesondere nachdem das Öl die Kupplungseinrichtung gekühlt und/oder geschmiert hat.

In Fig. 1 ist mit PTU ein Bereich bezeichnet, in welchem für Allradgetriebevarianten des Kraftfahrzeugs ein auch als Power-Take-Off-Unit bezeichneter Nebenabtrieb angeordnet ist. Dabei weist die Differentialkapseleinrichtung 24 in dem Bereich PTU beziehungsweise an einer dem Bereich PTU zugewandten Stelle ST ihrer Außenseite AS eine insbesondere in radialer Richtung der Differentialeinheit 26 nach innen gezogene Bogenkontor BK auf, welche von dem Bereich PTU insbesondere in radialer Richtung der Differentialeinheit 26 weggewölbt und somit konkav ausgebildet ist.

In Fig. 2 ist durch Pfeile eine auch zweite Ölströmung 42 veranschaulicht, welche auch als zweiter Strom des Öls, zweite Strömung des Öls zweite Teilströmung, zweiter Teilstrom oder zweiter Ölstrom bezeichnet wird. Der zweite Strom ist beispielsweise durch das Öl gebildet, welches von dem Tellerrad 28 bei ersten, geringen Fahrgeschwindigkeiten des Kraftfahrzeugs, das heißt dann von dem Tellerrad 28 abgespritzt oder abgeschleudert wird, wenn das Kraftfahrzeug mit den ersten Fahrgeschwindigkeiten gefahren wird. Außerdem ist in Fig. 2 durch Pfeile 44 eine dritte Ölströmung veranschaulicht, welche auch als dritter Strom des Öls, dritte Strömung des Öls, dritter Teilstrom, dritte Teilströmung oder dritter Ölstrom bezeichnet wird. Der dritte Strom ist beispielsweise durch das Öl gebildet, welches bei gegenüber den ersten Fahrgeschwindigkeiten höheren, zweiten Fahrgeschwindigkeiten, das heißt dann von dem Tellerrad 28 abgeschleudert oder abgespritzt wird, wenn das Kraftfahrzeug mit den gegenüber den ersten Fahrgeschwindigkeiten höheren oder größeren, zweiten Fahrgeschwindigkeiten gefahren wird. Mittels der Differentialkapseleinrichtung 24 werden die genannten Ölströmungen 40, 42 und 44 vereinigt, insbesondere zu einer in Fig. 2 durch einen Pfeil veranschaulichten Gesamtölstrom 46, und die Ströme des Öls und/oder der Gesamtölstrom 46 wird insbesondere auf ihren Wegen oder seinem Weg zu dem und in den Sumpf beruhigt. Diese auch als Ölberuhigung bezeichnete Beruhigung des Öls, mithin der Teilströme und/oder des Gesamtstroms, erfolgt beispielsweise in einem oder durch einen in Fig. 2 mit 48 bezeichneten Bereich der Differentialkapseleinrichtung 24. In Fig. 2 ist ein Eintritt der Differentialkapseleinrichtung 24 mit 50 bezeichnet, wobei beispielsweise der erste Strom über den oder an dem Eintritt 50 in die Differentialkapseleinrichtung 24 eintritt. Ein zweiter Eintritt der Differentialkapseleinrichtung 24 ist mit 52 bezeichnet, wobei beispielsweise an dem oder über den zweiten Eintritt 52 das von dem Tellerrad 28 abgeschleuderte oder abgespritzte Öl in die Differentialkapseleinrichtung 24 eintritt. Beispielsweise kann der genannte Radsatz die Differentialeinheit und/oder das Tellerrad umfassen.

Beispielsweise ist aus Fig. 3 und 4 eine erste axiale Stirnseite AS1 der Differentialkapseleinrichtung 24 erkennbar. In vollständig hergestelltem Zustand des Antriebsaggregats 10 ist die erste axiale Stirnseite AS1 der Differentialkapseleinrichtung 24 dem Radsatzraum und/oder der Differentialeinheit 26, insbesondere dem Tellerrad 28, zugewandt. Eine insbesondere auf der axialen Seite AS1 angeordneter Ölsammelraum ist mit 54 bezeichnet. Ein insbesondere auf der axialen Seite AS1 angeordneter und auch als Ölführungskanal bezeichneter Ölkanal der Differentialkapseleinrichtung 24 ist in Fig. 3 mit 56 bezeichnet. Somit weist beispielsweise die Differentialkapseleinrichtung 24 auf ihrer in axialer Richtung der Differentialeinheit 26 dem Radsatzraum zugewandten, axialen Seite AS1 eine gegenüber der Umfangsrichtung schräg angestellte Ölrampe 58 für ein Rückführen des bei den ersten Fahrgeschwindigkeiten von dem Tellerrad 28 abspritzenden Öls in den Ölsumpf 30 auf. Der Ölkanal 56 ist ein Ölführungskanal, welcher auf der dem Radsatzraum in axialer Richtung der Differentialeinheit 26 zugewandten, axialen Seite AS1 der Differentialkapseleinrichtung 24 angeordnet ist, wobei der Ölkanal 56 (Ölführungskanal) in einem in Einbaulage des Antriebsaggregats 10 in Fahrzeughochrichtung oberen Bereich BE der Differentialkapseleinrichtung 24 angeordnet ist. Dabei nimmt das Antriebsaggregat 10 seine in den Fig. gezeigte Einbaulage in vollständig hergestelltem Zustand des das Antriebsaggregat 10 aufweisenden Kraftfahrzeugs ein. Aus Fig. 3 ist erkennbar, dass sich der Ölführungskanal (Ölkanal 56) in um die Drehachse 36 und somit um die axiale Richtung der Differentialeinheit 26 erstreckender Umfangsrichtung der Differentialeinheit 26 herum erstreckt und bei einem Durchbruch 60 der Differentialkapseleinrichtung 24 endet, wobei der Ölführungskanal (Ölkanal 56) für ein Rückführen des bei den zweiten Fahrgeschwindigkeiten von dem Tellerrad 28 abspritzenden oder abgespritzten Öls in den Ölsumpf 30 verwendet wird. Die Differentialkapseleinrichtung 24 weist auf ihrer dem Radsatzraum in axialer Richtung der Differentialeinheit 26 zugewandten, axialen Seite AS1 den Durchbruch 60 auf, welcher für eine Ausleitung des Öls aus der Differentialeinheit 26. Insbesondere können die durch die Pfeile veranschaulichten zweiten und dritten Ölströmungen 42 und 44 in dem oder durch den Ölsammelraum 54 vereinigt werden, wodurch eine besonders vorteilhafte und bedarfsgerechte Führung des Öls darstellbar ist. Aus Fig. 3 ist erkennbar, dass der Durchbruch 60 in Einbaulage des Antriebsaggregats und in einer senkrecht zur axialen Richtung der Differentialeinheit 26 und somit senkrecht zur Drehachse 36 verlaufenden Ebene betrachtet auf einer in etwa Neun-Uhr-Position angeordnet ist. Beispielsweise ist die Differentialkapseleinrichtung 24 an dem Getriebegehäuseteil 18 befestigt und deckt beispielsweise in Einbaulage des Antriebsaggregats 10 auf einer dem Kupplungsgehäuseteil zugewandten Seite einen Ölaustrittsbereich insbesondere des Getriebegehäuseteils 18 ab, wobei beispielsweise der Ölaustrittsbereich für aus dem Kupplungsgehäuse, insbesondere dem Kupplungsraum, austretendes Öl vorgesehen ist.

Besonders gut in Fig. 4 erkennbar sind der Ölkanal 56, der Ölsammelraum 54 und die Ölrampe 58. Beispielsweise aus Fig. 2 erkennbar ist eine zweite axiale Seite AS2 der Differentialkapseleinrichtung 24, deren axiale Seiten AS1 und AS2 beispielsweise axiale Stirnseiten der Differentialkapseleinrichtung 24 sind. Besonders gut aus Fig. 2 ist erkennbar, dass die axialen Seiten AS1 und AS2 der Differentialkapseleinrichtung 24 in axialer Richtung der Differentialeinheit 26 voneinander wegweisen und einander gegenüberliegen. Dabei ist beispielsweise die zweite axiale Seite AS2 in axialer Richtung der Differentialeinheit 26 von der Differentialeinheit 26 und/oder dem Radsatzraum abgewandt und beispielsweise der Kupplungseinrichtung und dem Kupplungsraum zugewandt.

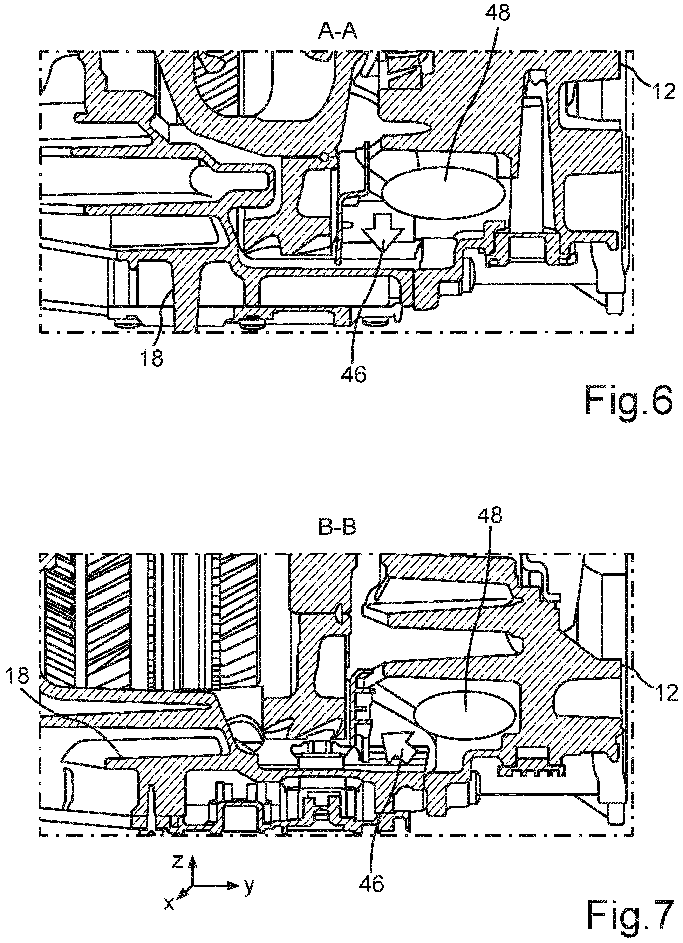

In Fig. 5 ist eine insbesondere in Einbaulage des Antriebsaggregats 10 in Fahrzeughochrichtung über dem auch als Ölstandniveau bezeichneten Ölpegel 32 angeordnete Wandung der Differentialkapseleinrichtung 24 erkennbar und mit 62 bezeichnet. Insbesondere ist oder fungiert die Wandung 62 als ein Trennelement zwischen einem Beruhigungsraum zwischen der Differentialeinheit 26 und dem Ölsumpf 30 (s. Fig. 8). Außerdem ist eine Wandabdeckung der Differentialkapseleinrichtung 24, welcher über einer Rippe zwischen Lagern oberhalb des Ölstandniveaus angeordnet ist, mit 64 bezeichnet. Der Gesamtstrom und der Bereich 48 sind aus Fig. 6 und 7 erkennbar, wobei in Fig. 6 eine schematische Ansicht von Schnitt A-A in Fig. 5 und Fig. 7 eine schematische Ansicht von Schnitt B-B in Fig. 5 zeigt.

Aus Fig. 2 und 9 ist erkennbar, dass die Differentialkapseleinrichtung 24 einen Verdrängungskörper 66 mit einem Rampenlabyrinth 68 aufweist, insbesondere zur weiteren Beruhigung und/oder Entgasung des Öls.

## Patentansprüche

1. Antriebsaggregat (10) für ein Kraftfahrzeug, mit:
- einem Gehäuse (12);
- einer Getriebeeinrichtung (14), welche Getriebeelemente (16) aufweist, die in einem Getriebegehäuseteil (18) des Gehäuses (12) angeordnet sind;
- zumindest einem Radsatz, welcher in einem Radsatzraum des Gehäuses (12) angeordnet ist;
- wenigstens einer Kupplungseinrichtung, welche in einem Kupplungsraum des Gehäuses (12) angeordnet ist;
- einer Differentialeinheit (26) mit einem Tellerrad (28); und
- einem in einem Bodenbereich (34) des Getriebegehäuseteils (18) angeordneten Ölsumpf (30) zur Ansammlung von Öl zumindest zur Schmierung und Kühlung der Getriebeelemente (16),
wobei
eine Differentialkapseleinrichtung (24), welche auf einer axialen Stirnseite (S1) der Differentialeinheit (26) angeordnet und als ein radialer Ringkörper ausgeführt ist, welcher in einem radialen Bereich des Tellerrads (28) angeordnet ist, sich in eine Umfangsrichtung (38) der Differentialeinheit (26) über höchstens 75% eines Umfangs der Differentialeinheit (26) erstreckt und:
- auf einer dem Radsatzraum zugewandten axialen Seite (AS1) der Differentialkapseleinrichtung (24) einen Durchbruch (60) für eine Ausleitung des Öls aus der Differentialeinheit (26) aufweist;
- auf der dem Radsatzraum zugewandten axialen Seite (AS1) der Differentialkapseleinrichtung (24) eine gegenüber der Umfangsrichtung schräg angestellte Ölrampe (58) für ein Rückführen des bei ersten Fahrgeschwindigkeiten des Kraftfahrzeugs von dem Tellerrad (28) abspritzenden Öls in den Ölsumpf (30) aufweist; und
- auf der dem Radsatzraum zugewandten axialen Seite (AS1) der Differentialkapseleinrichtung (24) einen in einem in Einbaulage des Antriebsaggregats (10) in Fahrzeughochrichtung oberen Bereich (BE) angeordneten, sich in Umfangsrichtung (38) erstreckenden und bei dem Durchbruch (60) endenden Ölführungskanal (56) für ein Rückführen des bei gegenüber den ersten Fahrgeschwindigkeiten höheren, zweiten Fahrgeschwindigkeiten des Kraftfahrzeugs von dem Tellerrad (28) abspritzenden Öls in den Ölsumpf (30) aufweist, wobei die Differentialkapseleinrichtung (24) an dem Getriebegehäuseteil (18) befestigt ist, **dadurch gekennzeichnet, dass** die Differentialkapseleinrichtung (24) in Einbaulage des Antriebsaggregats (10) auf einer einem den Kupplungsraum bildenden Kupplungsgehäuseteil des Gehäuses (12) zugewandten Seite einen Ölaustrittsbereich für aus dem Kupplungsgehäuse austretendes Öl abdeckt.

2. Antriebsaggregat (10) nach Anspruch 1,
**dadurch gekennzeichnet, dass**
der Durchbruch (60) in Einbaulage des Antriebsaggregats (10) auf einer Neun-Uhr-Position angeordnet ist.

3. Antriebsaggregat (10) nach einem der vorhergehenden Ansprüche,
**dadurch gekennzeichnet, dass**
die Differentialkapseleinrichtung (24) einen Verdrängungskörper (66) mit einem Rampenlabyrinth (68) aufweist.

4. Antriebsaggregat (10) nach Anspruch 3,
**dadurch gekennzeichnet, dass**
der Verdrängungskörper (66) mit dem Rampenlabyrinth (68) in Einbaulage des Antriebsaggregats (10) auf einer 5-Uhr-Position angeordnet ist.

5. Antriebsaggregat (10) nach einem der vorhergehenden Ansprüche,
**dadurch gekennzeichnet, dass**
die Differentialkapseleinrichtung (24) in einem Bereich (PTU), in welchem für Allradgetriebevarianten ein Nebenabtrieb angeordnet ist, an einer Außenseite (AS) der Differentialkapseleinrichtung (24) eine nach innen gezogene Bogenkontur (BK) aufweist.

6. Kraftfahrzeug, mit einem Antriebsaggregat nach einem der vorhergehenden Ansprüche.

## Claims

1. Drive unit (10) for a motor vehicle, comprising:
- a housing (12);
- a transmission device (14) which has transmission elements (16) arranged in a transmission housing part (18) of the housing (12);
- at least one wheelset arranged in a wheelset space of the housing (12);
- at least one clutch device arranged in a clutch space of the housing (12);
- a differential unit (26) which has a crown wheel (28); and
- an oil sump (30) arranged in a lower region (34) of the transmission housing part (18) for collecting oil at least for the lubrication and cooling of the transmission elements (16),
wherein
a differential capsule device (24), arranged on an axial end face (S1) of the differential unit (26) and designed as a radial annular body, is arranged in a radial region of the crown wheel (28) and extends in a circumferential direction (38) of the differential unit (26) over a maximum of 75% of a circumference of the differential unit (26), and:
- on an axial side (AS1) of the differential capsule device (24) facing the wheelset space, said device has an opening (60) for the discharge of oil from the differential unit (26);
- on the axial side (AS1) of the differential capsule device (24) facing the wheelset space, said device has an oil ramp (58), tilted relative to the circumferential direction, for returning the oil sprayed from the crown wheel (28) into the oil sump (30) at the first driving speeds of the motor vehicle; and
- on the axial side (AS1) of the differential capsule device (24) facing the wheelset space, said device has an oil guide channel (56), arranged in an upper region (BE) in the installation position of the drive unit (10) in the vehicle's vertical direction, extending in the circumferential direction (38) and ending at the opening (60), for returning the oil sprayed from the crown wheel (28) into the oil sump (30) at the second driving speeds, which are higher than the first driving speeds, of the motor vehicle, wherein the differential housing device (24) is attached to the transmission housing part (18), **characterized in that** the differential capsule device (24) in the installation position of the drive unit (10) covers an oil outlet region for oil leaking from the clutch housing on a side facing a clutch housing part of the housing (12) forming the clutch space.

2. Drive unit (10) according to claim 1,
**characterized in that**
the opening (60) is arranged at a nine o'clock position in the installation position of the drive unit (10).

3. Drive unit (10) according to either of the preceding claims,
**characterized in that**
the differential capsule device (24) has a displacement body (66) having a ramp labyrinth (68).

4. Drive unit (10) according to claim 3,
**characterized in that**
the displacement body (66) having the ramp labyrinth (68) is arranged at a 5 o'clock position in the installation position of the drive unit (10).

5. Drive unit (10) according to any of the preceding claims,
**characterized in that**
the differential capsule device (24) has an inwardly drawn arc contour (BK) on an outer side (AS) of the differential capsule device (24) in a region (PTU) in which a power take-off is arranged for all-wheel drive variants.

6. Motor vehicle comprising a drive unit according to any of the preceding claims.

## Revendications

1. Groupe motopropulseur (10) destiné à un véhicule automobile, comportant :
- un carter (12) ;
- un dispositif formant transmission (14) qui présente des éléments de transmission (16) disposés dans une partie de carter de transmission (18) du carter (12) ;
- au moins un essieu disposé dans un espace pour essieu du carter (12) ;
- au moins un dispositif formant embrayage qui est disposé dans un espace d'embrayage du carter (12) ;
- une unité de différentiel (26) comportant une couronne de différentiel (28) ; et
- un carter d'huile (30) disposé dans une zone inférieure (34) de la partie de carter de transmission (18) et destiné à recueillir l'huile, au moins pour la lubrification et le refroidissement des éléments de transmission (16),
dans lequel
un dispositif formant boîtier de différentiel (24) qui est disposé sur un côté frontal axial (S1) de l'unité de différentiel (26) et qui est réalisé sous la forme d'un corps annulaire radial, lequel est disposé dans une zone radiale de la couronne de différentiel (28), s'étend dans une direction circonférentielle (38) de l'unité de différentiel (26) sur au plus 75 % de la circonférence de l'unité de différentiel (26) et :
- présente, sur un côté axial (AS1) du dispositif formant boîtier de différentiel (24) tourné vers l'espace pour essieu, une ouverture (60) pour l'évacuation de l'huile hors de l'unité de différentiel (26) ;
- présente, sur le côté axial (AS1) du dispositif formant boîtier de différentiel (24) tourné vers l'espace pour essieu, une rampe à huile (58) inclinée par rapport à la direction circonférentielle pour le renvoi dans le carter d'huile (30) de l'huile projetée par la couronne de différentiel (28) lors des premières vitesses de conduite du véhicule automobile ; et
- présente, sur le côté axial (AS1) du dispositif formant boîtier de différentiel (24) tourné vers l'espace pour essieu, un canal de guidage d'huile (56) disposé, dans la position de montage du groupe motopropulseur (10), dans une zone supérieure (BE) dans la direction de la hauteur du véhicule, s'étendant dans la direction circonférentielle (38) et se terminant au niveau de l'ouverture (60), lequel canal est destiné à renvoyer dans le carter d'huile (30) l'huile projetée par la couronne de différentiel (28) lors des secondes vitesses de conduite du véhicule automobile supérieures aux premières vitesses de conduite, dans lequel le dispositif formant boîtier de différentiel (24) est fixé à la partie de carter de transmission (18), **caractérisé en ce que** le dispositif formant boîtier de différentiel (24), dans la position de montage du groupe motopropulseur (10), recouvre, sur un côté tourné vers une partie de carter d'embrayage du carter (12) formant l'espace d'embrayage, une zone de sortie d'huile pour l'huile s'échappant du carter d'embrayage.

2. Groupe motopropulseur (10) selon la revendication 1,
**caractérisé en ce que**
l'ouverture (60) est située, dans la position de montage du groupe motopropulseur (10), à la position « 9 heures ».

3. Groupe motopropulseur (10) selon l'une des revendications précédentes,
**caractérisé en ce que**
le dispositif formant boîtier de différentiel (24) présente un corps de déplacement (66) comportant un labyrinthe à rampes (68).

4. Groupe motopropulseur (10) selon la revendication 3,
**caractérisé en ce que**
le corps de déplacement (66) comportant le labyrinthe à rampes (68) est disposé, dans la position de montage du groupe motopropulseur (10), à la position « 5 heures ».

5. Groupe motopropulseur (10) selon l'une des revendications précédentes,
**caractérisé en ce que**
le dispositif formant boîtier de différentiel (24) présente, dans une zone (PTU) dans laquelle est disposée une prise de force pour les versions à transmission intégrale, sur un côté extérieur (AS) du dispositif formant boîtier de différentiel (24), un contour courbe (BK) incurvé vers l'intérieur.

6. Véhicule automobile, comportant un groupe motopropulseur selon l'une des revendications précédentes.
